# EUROPEAN PATENT APPLICATION

(11) **EP 1 106 744 A1**
(43) Date of publication of application: **13.06.2001**
(21) Application number: 99309921.7
(22) Date of filing: 09.12.1999
(51) Int. Cl.: E04B 1/94

(54) **Fire and heat resistant materials**

(71) Applicant: BTG INTERNATIONAL LIMITED, London EC4M 7SB (GB)
(72) Inventor: The designation of the inventor has not yet been filed
(74) Representative: Scott, Fiona Penelope Elaine

(57) **Abstract**

A rigid composite material comprising a fire retardant fibrous element, an intumescent material and a resin is provided. When the composite material is exposed to conditions under which charring of the fire retardant fibrous element, intumescent and resin occurs, the charred surfaces of the fire retardant fibrous element, intumescent and resin to bond together. Methods of preparing the composite material are also provided. The materials can be used in load bearing applications and are able to act as fire barriers under conditions of heat and flame.

## Description

The present invention relates to fire and heat resistant materials and to their use as barriers to the propagation of fire, heat and flames.

Fibre-reinforced laminate composites have become very competitive engineering materials in recent years and have successfully replaced conventional metallic and polymeric materials in many important sectors of industry. The mechanical properties of these laminate materials can be either anisotropically or isotropically tailored by the choice of fibre, matrix, interface treatment characteristics and spatial geometry. The advantages associated with these materials include a low density, high specific strength and stiffness, good corrosion resistance, and improved fatigue properties. They have thus been increasingly used in load-bearing structures such as aircraft, vehicles, ships, pipelines, storage tanks, and sports equipment. However, when these structures are exposed to conditions of flame and intense heat, their behaviour is not always predictable. This unpredictability is of particular concern for those materials used in maritime and offshore, aircraft and aerospace and modern rail applications, where the materials used must satisfy stringent requirements regarding heat and flame resistance as well as low smoke emissions. Unfortunately, many of these composite systems fail or fall short of recognised fire performance requirements or are unable to maintain their integrity upon exposure to fire or heat. This means that they are unable to contain a fire for any period of time.

Methods of fireproofing composite structures are known. One method utilises mineral and ceramic wool (Kovar and Bullock, Proc.6th Conf. Recent Advances Flame Retard. Polymeric Mat., 1993, 87-98). However these materials have the disadvantage that they are bulky, heavy and act as an absorbent for cargoes of spilt fuel or flammable liquid in a fire situation.

A second method is to use a fire-retardant paint or coating (often intumescent-based) with limited fire performance. Finally it is possible to introduce a flame-retardant additive into a matrix resin system. The latter two methods are particularly effective if the fire retardant additives are able to generate a heat and flame resistant char in their own right or are able to promote carbonisation (and hence char formation) of the composite components, usually the resin. Unfortunately in the case of coatings the protective char may detach under fire stress, whereas charring of the composite matrix will cause significant weakening of the structure in the case of the flame-retardant treated composite structure.

It will be understood that the term "char" is used throughout this specification to refer to the carbonised form of the polymeric (including fibrous) material produced following the application of heat to the materials herein described. Char formation usually begins at temperatures above 250°C in the more common polymers. Initial char formation in the temperature range 250 to 350°C is generally characterised by cross-linking reactions, which occur between aliphatic polymer chains. As the temperature rises above 350°C, the char assumes an aromatic (and often graphitic) structure. However in the presence of air, oxidation of the carbonaceous char occurs in the range 400 to 450°C. The use of the term "charring" will therefore be understood as describing the chemical and physical processes which lead to the formation of the char and the development of its structure.

Flame retardant, flexible fabrics comprising a fire-retardant fibre element and an intumescent material are known. When these fabrics are exposed to conditions of intense heat and flame the surfaces of the charring fibres and intumescent bond together to give a material having unexpectedly high flame and heat barrier properties (EP 631 515; Horrocks et al, Proc. Flame Retardants' 94, Interscience, London, 1994, 117-128.). The increased amount of char produced is indicative of the ability of the material to withstand heat and act as a fire barrier. These char-bonded structures can withstand temperatures of up to 1200 °C for up to 10 minutes if the fibre and fabric structures are chosen carefully. However, these materials are not suitable for structural or load bearing applications.

For reasons of clarity, the term "char-bonding" as used herein refers to the process by which a complex char is formed between two or more independent component materials, which char by similar physical and chemical mechanisms. These otherwise independent char-forming materials interact when heated to form a complex, integrated char or char-bonded material. The physical and chemical properties of these integrated chars have been found to be superior to the chars obtained from each of the component materials independently; compared to the individual component materials, these composites are less susceptible to oxidation and are more resistant to conditions of strain and load.

There is, therefore, a need for a rigid, load bearing composite material having the ability to retain up to 50% of failure loads for periods of up to 30 minutes when subjected to incident temperatures of up to 1000°C. By the term "failure load" it is understood to mean the load at which the composite material fails prior to exposure to conditions of heat and flame. The present invention addresses that need.

A first aspect of the present invention provides a rigid composite material comprising a fire retardant fibre element, an intumescent material and a resin, characterised in that when the composite material is exposed to conditions under which charring of the fire retardant fibre element, intumescent and resin occurs, the charred surfaces of the fire retardant fibre element, intumescent and resin to bond together. This bonding of the charred surfaces is known as char bonding and, as indicated above, occurs when the physical and chemical char-forming actions of the material components occur simultaneously. The charred fibres produced upon exposure of the composite material to conditions of heat and flame are essentially reinforced by the char-bonding effect and provide a barrier to the propagation of heat and smoke. The material of the present invention forms a fire barrier through the swelling and interactive charring of its components in fire situations. These fire barriers have a surprising ability to prevent or contain the spread of fire under conditions of load.

The term "reinforced" is used herein in relation to both the composite and the charred material. When this term is used in relation to the charred material it is understood to mean that the char-bonded fibres present therein have a greater ability to withstand conditions of load and vibration compared to the charred fibres of the individual composite components when the char bonding property is absent. The amount of char produced upon exposure of the composite material to conditions of heat and flame provides a good indication of the level of reinforcement that a charred material is able to exhibit. When the term is used in relation to the composite (before exposure to conditions of heat and flame) it is understood to mean that the presence of the reinforcing fibre component increases the magnitude of the compressive, tensile, shearing and flexural loads that the composite is able to withstand before failing.

It should be understood that the terms "fire retardant" and "flame retardant" are used interchangeably herein, these terms being used to describe fibre elements having a reduced tendency to ignite or burn under conditions of heat and flame as a consequence of efficient char formation.

It has been found that the reinforcement of the char-bonded fibres produced from the materials of the present invention is greater than that of the char-bonded fibres produced upon exposure of the flexible materials of EP 631 515 to similar conditions of heat and flame. The char-bonded fibres of the present invention have also been found to be more resilient than the charred fibres of each of the individual composite components due to their ability to absorb and release energy without rupturing. In addition the amount of char produced from the materials of the present invention and their ability to withstand oxidation above 500°C is also greater than that of both the individual components of the composite and the composite materials of EP 631 515.

The rigid composite materials of the present invention are capable of retaining loads of up to 50% of the failure load when exposed to high heat fluxes equivalent to those generated by real fires (typically 25 - 75 kW m⁻² in air). The materials are typically able to retain these loads at temperatures of 1000°C for periods of up to 30 minutes and at temperatures up to 1200°C for shorter periods.

The rigid composite materials of the invention preferably also contain an additional fibre element, which is not of itself fire-retardant or has been treated with a fire-retardant material. This additional fibre element acts as a reinforcing element to enhance the strength and flexibility of the composite material so formed. It is possible, although not essential that this additional fibre-reinforcing element also chars and enters into the char-bonding process. Examples of additional fibre elements include glass, aramid, polyester and polyamide fibres.

The fire retarded and additional fibre elements are suitably present in a weight ratio with respect to the resin component of from 40:60 to 70:30, preferably from 50:50 to 60:40.

A proportion of the fire-retarded fibre element may comprise a fire-retarded reinforcing element. The amount of fire retarded reinforcing element present in the material depends upon both the amount of additional fibre elements present and the end use to which the material will be put.

The flame-retardant fibrous elements (both reinforcing and otherwise) of the invention are either inherently fire resistant or have been rendered fire retardant before or after being formed into a textile fabric. It is preferred that the total amount of the fibre reinforcing element (fire retarded and non-fire retarded) present in the composite comprises at least 50% w/w of the total fibre content of the composite material. Depending upon the desired mechanical and flame resistant properties of the composite, this fibre content may be as much as 90% w/w. It is especially preferred that the reinforcing fibre element comprises 75 to 80% w/w of the total fibre content. It will therefore be appreciated that the remaining fire-retarded fibre element comprises from 20 to 50% w/w of the total fibre content. The fibre elements suitably begin to char at a temperature of from 250°C to 330°C, preferably at a temperature of 300°C, with full char development occurring at a temperature of between 430 and 490°C, preferably 450°C.

The reinforcing fibres are selected from one or both of untreated and fire retarded reinforcing elements, which may be used in the form of a woven, nonwoven or knitted fabric. Woven fabrics are preferred. The direction of orientation of the fabric layers relative to each other may be varied to produce materials having a range of strengths, flexibility and isotropy of properties. The fabric area, weave structure and fibre diameters depend upon the ultimate use of the composite and will be readily determined by a skilled person.

Suitable fabrics are selected from those comprising organic, inorganic and mixed organic-inorganic fibres. Examples of suitable organic fibres include cotton, viscose and wool, all of which will normally have been rendered fire resistant by an appropriate flame-retardant treatment to give the necessary degree of charring within the desired temperature range.

Examples of inherently fire retardant fibres are Visil (Sateri Fibres, Finland) and Viscose FR (Lenzing, Austria) both of which contain fire retardant additives introduced during fibre manufacture and which promote char formation at temperatures above 300°C. Other examples based on inherently fire resistant synthetic fibres are the poly (phenol-formaldehyde) or novoloid fibre (Kynol, Kynol Corp., Japan) and the polyaramid fibres such as Nomex (DuPont), Kevlar (DuPont) and Twaron (Acordis). Chemically treated fibres include cotton treated with a number of char-promoting, phosphorus and nitrogen-containing agents such as diammonium phosphate, ammonium polyphosphate, tetrakis (hydroxymethyl) phosphonium - urea condensates (eg Proban, Albright and Wilson) and derivatives of phosphonic acid (eg Pyrovatex, Ciba). These chemicals are present such that the phosphorus levels comprise from 2 to 4% by weight with respect to cellulose.

A wide variety of fire retardation treatments are commercially available. For example, fibres may be chemically treated before, during or after processing into a textile product. Alternatively, the fibres can be flame retarded by modification of their chemical structure during manufacture or by incorporation of flame-retardant additives during manufacture.

An example of an organic fibre component includes cotton to which a flame-retardant treatment has been applied at a level commensurate with a phosphorus concentration of 2.5% by weight or greater with respect to the fibre weight. As an alternative, the organic fibres may be viscose to which a flame-retardant additive has been added during the fibre production stage.

It may be desirable to replace a proportion of the organic fibres referred to above with an organic fibre, which chars at higher temperatures than the other components of the material. Although the inclusion of these "less compatible" materials diminishes the char bonding effect, some degree of interaction between their carbonising surfaces and the other components does occur, which provides some reinforcement to the degrading structure. Examples of such less compatible organic fibres include the inherently fire retardant polyaramids, novoloids and polybenzimidazoles referred to above.

If the fire resistant material of the present invention includes an inorganic fibre component, this preferably has a melting point at a temperature significantly higher than that of any organic fibre present in order to impart a high chemical oxidative resistance to the material at these higher temperatures.

The effect of including an inorganic fibre into the material is to reinforce the material by impeding the diffusion of oxygen there through. In addition the inorganic component will create a skeletal structure, which provides the material with a thermally insulative property, even after all of the carbonaceous materials in the structure have been gasified. The inorganic component is suitably able to withstand temperatures in excess of 500°C and is preferably able to withstand temperatures in excess of 1000°C before melting or losing strength. Suitable inorganic reinforcing elements include glass and silica.

Conveniently the inorganic fibre component is provided either by a fabric, which includes a blend of organic and inorganic fibres and/or by using fibres which are part organic and part inorganic as a result of their molecular structure. Hereinafter, fibres which are part organic and part inorganic will be referred to as "hybrid" organic fibres, whilst organic fibres having either no organic component or only a negligible inorganic component will be referred to as "simple" organic fibres.

The inorganic or incompatible fibres can optionally replace some or all of the reinforcing fibres present in the material. It will therefore be appreciated that these incompatible fibres may comprise between 50 and 90 % of the total fibre content of the composite material.

Suitable hybrid fibres include inorganic components such as silicic acid. Preferred hybrid fibres include a staple viscose fibre having a silicic acid component, sold under the trademark VISIL by Sateri, Finland. Preferred VISIL fibres comprise 30% w/w (as silica) polysilicic acid and 70% w/w cellulose. As compared with a blend of simple organic and inorganic fibres, the presence of the two components in the one fibre has the advantage that during charring of the organic component, the resulting fibres possess an inorganic core. This provides a unique inorganic reinforcement to the char-bonded structure.

The materials of the present invention are constructed so as to provide a greater or smaller degree of expansion, depending upon the application in which they are to be used. The amount of intumescent material used in the manufacture of the material will be chosen accordingly to reflect these requirements. A relatively larger expansion may be desirable, for example, in applications where a thicker heat resistant barrier to the propagation of fire at lower temperatures is required. Alternatively, the degree of expansion need only be sufficient to compensate for the reduction in the thickness of the char caused by the oxidation processes, which occur at higher temperatures. The amount of intumescent present in the material is chosen so as to confer the desired flame and heat resistant properties to the composite without compromising the mechanical strength of the material so formed. Typical intumescent: fire retardant fibre ratios are in the range 0.2:1 to 1:1 w/w. The ratio of resin: fire retardant fibre is suitably 1:1 w/w.

A wide variety of intumescent systems may be used in the materials of the present invention. The particular system employed will be selected so as to ensure that the intumescent is activated at an appropriate temperature. Such systems commonly comprise an acid source, a carbonific material, a spumific compounds and optionally, a resin binder. The relative proportions of the acid source, carbonific and spumific materials used are selected to maximise the intumescent effect. The resin binder is suitably present in an amount comprising 15% w/w of the intumescent material and is sufficient to bind the latter to the fire resistant fibre surface. Examples of useful acid sources are mono- and di-ammonium phosphates, ammonium polyphosphates, melamine phosphate, guanyl phosphate, urea phosphate, ammonium sulphate and ammonium borate. Examples of useful carbonific materials are glucose, maltose, arabinose, erythritol, pentaerythritol, diand tri-pentaerythritol, arabitol, sorbitol, insitol and starches. Examples of spumific compounds include melamine, guanidine, glycine, urea and chlorinated paraffin. A wide variety of materials are available for use as the adhesive resin binders.

Particularly preferred intumescent materials include melamine phosphate alone or as a mixture with dipentaerythritol in a ratio of between 1:1 and 2:1. These intumescent materials are available commercially and are sold under the Trade Mark of Antiblaze NH and Antiblaze NW (Albright and Wilson) respectively.

The resin suitably comprises between 40 and 60% w/w and preferably comprises 50% w/w of the composite material. The physical and chemical thermal degradation and char-forming actions of the resins used in the materials of the present invention preferably occur simultaneously with the other components of the material. Suitable resins include thermosetting and cross-linked epoxy, phenolic and polyester resins. These resin systems are described by BK Kandola and AR Horrocks in Flame Retardant Composites - A Review - The Potential for Use of Intumescents in Fire Retardancy of Polymers, Edited by M. LeBras, G. Camino, S. Bourbigot and R Delobel, Royal Soc. Chem., London, 1998, pp 395 - 417; by J. Troitzsch in International Plastics Flammability Handbook, 2^{nd} Edition, Hanser, 1990, pp 31 - 33; by I Hamerton in Recent Developments in Epoxy Resins, Rapa Review Reports, Vol. 8, No. 7, 1996; by A Knop and LA Pilato, Phenolic Resins, Springer-Verlag, 1985, by Macaione and Tewarson in "Flammability Characteristics of Fibre-Reinforced Composite Materials", Chapter 32 in "Fire and polymer Hazards Identification and Prevention" edited by GL Nelson, ACS Symp. Ser. 425 ACS p 542; by Macaione in "Flammibility Characteristics of Fibre-Reinforced Composites for Combat Vehicle Applications", Report 1992, MTL TR 92-58; by Macaione and Tewarson in J. Fire Sci., 1993, 11, 421 and "Recent Advances in the Flame Retardancy of Polymeric materials , Vol. III, ed. Lewin, 1993 Conference proceedings, Business Communications Company, Stamford, Conn., 1992, 307; by Scudamore, Fire Mater., 1994, 18, 313 and by Egglestone and Turley in Fire Mater., 1994, 18, 225. The composite material is typically cured in an autoclave or a pressure autoclave.

If the char forming reaction of the resin occurs at too low a temperature, formation of the flame-retardant intumescent textile component is less efficient and occurs independently of the decomposing resin giving rise to a structure, which is less insulative. In addition the structural stability of the complex composite is compromised as the charring does not occur in a homogeneous manner. If the resin reaction takes place too slowly or at too high a temperature, the intumescent property of the modified textile component is constrained by the still-hard, stable resin, and again the char-forming reaction will not develop efficiently, which means that the insulating fire barrier formed becomes less effective for the adjacent composite laminate.

The composite material may comprise one or more layers of intumescent treated fabric interleaved with one or more layers of fabric not so treated. Preferably the intumescent treated fabric is a fire-retarded fabric. Such interleaved structures incorporate fire resistance throughout the whole thickness of the composite material and maximise fire performance. Alternatively, the intumescent treated fabric may be provided as an outer layer only, giving rise to a material having a sandwich appearance. Although these composites have a lower level of fire performance relative to the interleaved structures, they have the advantage of minimising any effect that the interleaved intumescent fibre layers may have on the physical and mechanical properties of the composite material. Furthermore, this sandwich geometry provides a skilled person with the possibility of introducing fire resistance to existing composites by "retro fitting" or treating that composite with resin impregnated outer layers.

The materials of the present invention are easily manufactured using standard techniques and a second aspect of the invention provides a method of manufacturing a rigid composite material according to the first aspect of the invention. In one preferred embodiment of the second aspect of the invention, the composite materials are manufactured by overlaying resin-impregnated fire retarded fabric layers of woven or nonwoven fibre elements and curing the resin to produce a rigid structure. The fire retarded layers may be interleaved with layers of the additional fibre element, also impregnated with resin. Alternatively, blocks of fire retarded layers may be placed adjacent or between blocks of the additional fibre element or *vice versa.* One or more of the fabric layers is treated with an intumescent material.

Alternatively, in a second embodiment of the second aspect of the invention, the materials of the invention are formed by casting a suspension of the fire-retarded fibre element in resin and curing the resin. The fire retarded element preferably comprises short fibre lengths of 1mm or less.

In a further embodiment of the second aspect of the invention, the materials of the invention are manufactured by overlaying fabric layers of fire retarded or additional fibre elements impregnated with a resin suspension of a fire-retarded fibre element. The resin suspension may be applied to the fibre-reinforcing element either before or after these elements are overlaid. The intumescent material may be present in association with one or more of the fibre layers or with the fibre in suspension. Alternatively the intumescent may itself be introduced as a suspension in the resin.

In each of the foregoing embodiments of the second aspect of the invention the fabric layers may be impregnated with resin either before or after they are interleaved. Preferably the fabric layers are impregnated with resin before they are interleaved. The use of resin impregnated fabric layers greatly facilitates the production of composite materials having a range of shapes and configurations.

In addition the intumescent material may be applied to the fabric before resin impregnation. Alternatively, the intumescent material may be added to the resin before the "impregnation" stage. If desired a mixture of intumescent and the fire retardant fibre element (in lengths of 1mm or less) may be mixed to a suspension or paste with resin before being used to impregnate the fibre reinforcing elements.

The rigid composite materials of the present invention may be manufactured by interleaving layers of intumescent treated fabric with layers of fabric not so treated, impregnating the interleaved layers with resin and curing the resin. Alternatively, the fabric layers are arranged so that non-intumescent fabric layers are positioned between intumescent treated outer fabric layers before the material is impregnated with resin.

The composite materials of the invention are used in the manufacture of structural components for use in air and space, maritime, off-shore, civil engineering and construction, rail and automotive applications. A third aspect of the invention therefore provides a structural component comprising a composite material according to the first aspect of the invention.

A further aspect of the invention provides a vehicle including a composite material according to the first aspect of the invention.

The invention will now be described with reference to the following non-limiting figures and examples. Variations on these falling within the scope of the present invention will be apparent to a skilled person.

### FIGURES

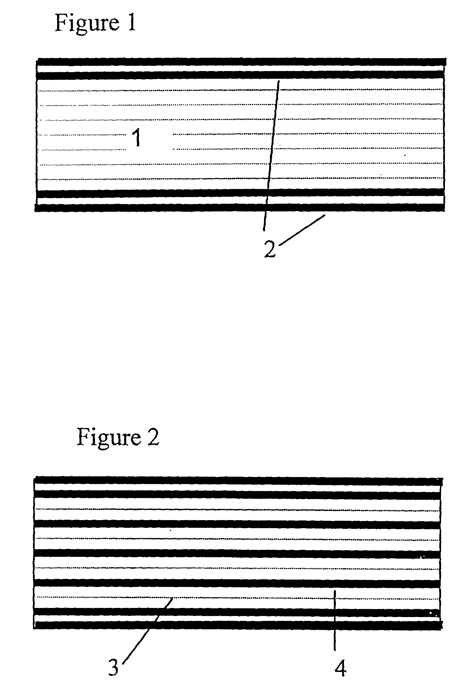

Figure 1 illustrates a cross-section of a structure according to one embodiment of the invention.

Figure 2 illustrates a cross-section of a structure according to a further embodiment of the invention.

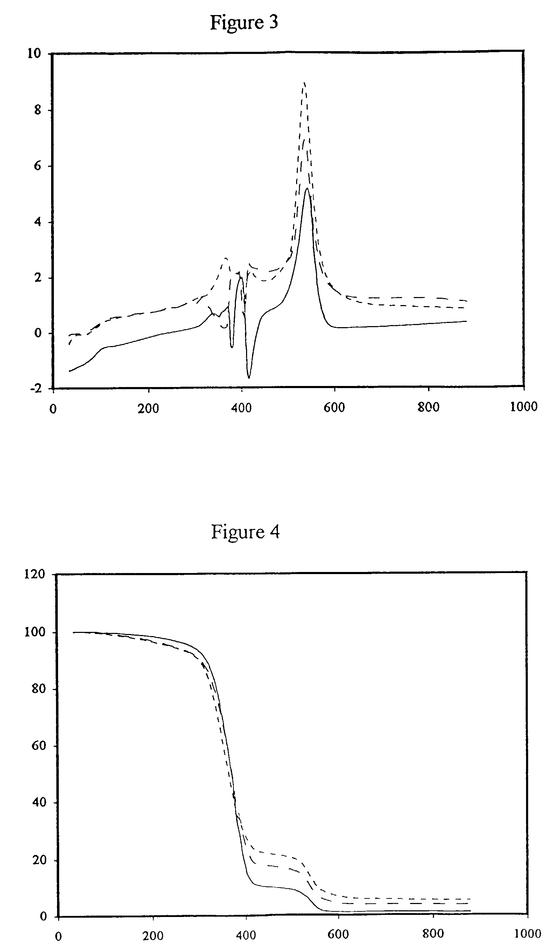

Figure 3 discloses the results of a Differential Thermal Analysis (DTA) of Crystic 471 PAL V resin (resin A) (―), a four layered composite according to the invention formed from resin A and Visil NW fibre (- - -) and a four layered composite according to the invention formed from resin A and Visil NH fibre (....). The abscissa represents temperature in °C and the ordinate represents the temperature difference in °C/mg⁻¹.

Figure 4 discloses the results of a Thermal Gravimetric Analysis (TGA) of Crystic 471 PAL V resin (resin A) (―), a four layered composite according to the invention formed from resin A and Visil NW fibre (- - -) and a four layered composite according to the invention formed from resin A and Visil NH fibre (....).The abscissa represents temperature in °C and the ordinate represents the weight in %.

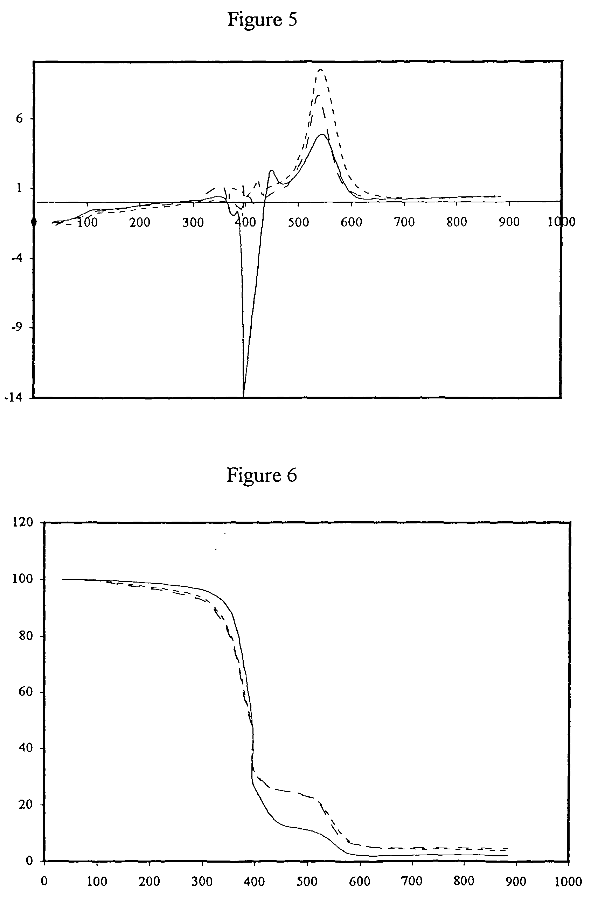

Figure 5 discloses the results of a Differential Thermal Analysis (DTA) of Crystic 491 PA resin (resin B) (―), a four layered composite according to the invention formed from resin B and Visil NW fibre (- - -) and a four layered composite according to the invention formed from resin B and Visil NH fibre (....). The abscissa represents temperature in °C and the ordinate represents the temperature difference in °C/mg⁻¹.

Figure 6 discloses the results of a Thermal Gravimetric Analysis (TGA) of Crystic 491 PA resin (resin B) (―), a four layered composite according to the invention formed from resin B and Visil NW fibre (- - -) and a four layered composite according to the invention formed from resin B and Visil NH fibre (....).The abscissa represents temperature in °C and the ordinate represents the weight in %.

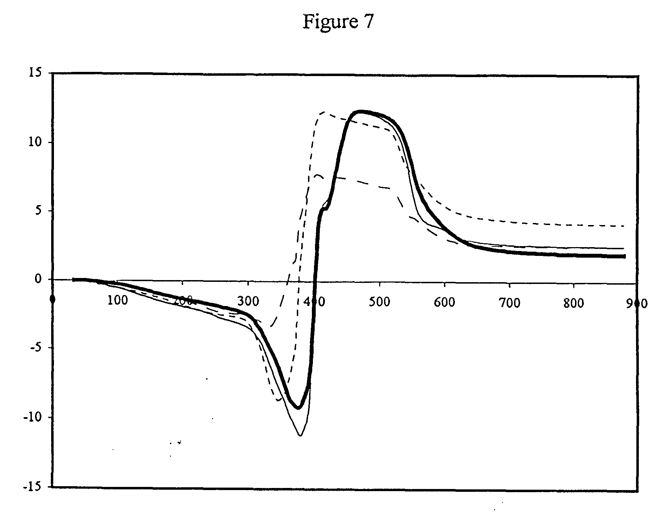

Figure 7 illustrates the additional char formation associated with the four layer resinfibre composites of the invention. (- - -) represents the composite formed from resin A and Visil NW. (...) represents the composite formed from resin A and Visil NH. (―) represents the composite formed from resin B and Visil NW. (―) represents the composite formed from resin B and Visil NH.

The structure of Figure 1 comprises a series of interleaved resin-impregnated reinforcing layers (1) sandwiched between one or more interleaved layers of intumescent-resin impregnated reinforcing layers (2).

The structure of Figure 2 comprises a series of resin-impregnated reinforcing layers (3) interleaved with layers of intumescent-resin impregnated reinforcing layers (4).

Both the sandwich structure of Figure 1 and the interleaved structure of Figure 2 have a thickness of from 2 to 20 mm, prefereably from 4 to 10 mm.

The rigid composite materials of the present invention are prepared by overlaying layers of resin-impregnated and intumescent-resin impregnated fabric and curing the resin. It will be appreciated that, by using this technique, it is possible to prepare planar or shaped structures as desired by placing the resin-impregnated layers in an appropriately shaped mould.

### EXAMPLES

### Example 1 - Preparation of Model Composite Materials

A number of resins and intumescents were selected and used to prepare models of composite materials as described above; these materials are listed below. The model composite materials were prepared as 1:0.5:0.5 (w/w) mixtures of resin:visil fibre:intumescent and were analysed using thermal analysis (10 mg samples in flowing air, 100 ml min⁻¹ at 10°C min⁻¹) to assess the char-forming behaviour of combinations with respect to both the individual components and the composite materials of EP 631 515. The results are presented below.

### Results

It was found that that for a number of resin/fibre/intumescent combinations (including the non-char-forming polyester resins) the amounts of char produced as well as their abilitiy to withstand oxidation above 500°C were greater than expected with respect to both the averaged individual component behaviour as well as the behaviour of the composites of EP 631 515. It therefore appears that these systems are able to confer considerable fire resistance to components in which they are present. Resin-intumescent, and in some cases Visil fibre combinations which show this behaviour are as follows :

### Resins

| **Polyester resins** (Scott Bader) | |
|---|---|
| 1. | Crystic 2-414PA (orthophthalic) |
| 2. | Crystic 471 PALV (orthophthalic) |
| 3. | Crysic 491 PA (isophthalic) |
| 4. | Crystic 199 (isophthalic) |

| **Epoxy resins** (Hexcel composites) | |
|---|---|
| 1. | B1 - model formulation with Bis-A epoxy resin |
| | (resin DER 332 (86.9 parts)/ dicyandiamide hardener DICY (7.4 parts)/ accelerator Diuron (3.7 parts)/ Aerosil 200 (silica additive) (2.0 parts)) |
| 2. | B2 - model formulation with Bis-F epoxy trifunctional resin |
| 3. | B3 - modification of B2 formulation |
| 4. | B4 - modification of B 1 formulation |

| **Phenolic (Resole) resins** (Hexcel composites) | |
|---|---|
| 1. | DDP 5235 (Dynochem UK) |
| 2. | Durez 51010 |
| 3. | XDF 4329 |
| 4. | K6541 |
| 5. | DIR 33136 |

Epoxy resin formulation B1 was prepared by combining the DICY and Diuron components (supplied by Trade Micronising Ltd. and Hodgson Specialities respectively) with a small quantity of DER332 (supplied by Dow Chemicals) and mixed with a high speed disperser to disperse the powders in the liquid resin. The remaining DER332 was stirred with the Aerosil 200 (supplied by Degussa) until well mixed and then combined with the DICY/diuron/DER332 mixtures to form a homogeneous mixture. All the mixing was carried out at room temperature. The resulting mixture was stored in a freezer in a closed container at approximately -20°C and was fully defrosted before opening the container.

### Intumescents (Albright & Wilson)

Antiblaze NW (melamine phosphate and dipentaerythritol in a ratio between 1:1 and 2:1). Antiblaze NH (melamine phosphate)

Table 1 shows the additional char produced at various temperatures over the predicted amount of char produced from the materials of EP 631 515.

**Table 1:**

| Char enhancement of resin - intumescent combinations | | | | |
|---|---|---|---|---|
| System | Additional char, % | | | |
| | 500°C | 600°C | 700°C | 800°C |
| **Polyester resins / Visil / Antiblaze NW** | | | | |
| Crystic 2-414PA | 9.8 | 9.2 | 2.6 | 2.2 |
| Crystic 471 PALV | 12.4 | 15.8 | 13.6 | 3.3 |
| Crysic 491 PA | 11.1 | 13.5 | 10.3 | 2.4 |
| Crystic 199 | 10.3 | 12.6 | 8.2 | 4.1 |

| **Polyester resins/ Visil / Antiblaze NH** | | | | |
|---|---|---|---|---|
| Crystic 2-414PA | 9.1 | 12.4 | 12.1 | 3.7 |
| Crystic 471 PALV | 7.4 | 12.4 | 12.3 | 3.9 |
| Crysic 491 PA | 10.7 | 15.8 | 15.2 | 3.5 |
| Crystic 199 | 11.1 | 16.1 | 16.0 | 6.0 |

| **Epoxy resins / Visil / Antiblaze NW** | | | | |
|---|---|---|---|---|
| B1 - Bis-A epoxy resin | 6.6 | 7.8 | 1.5 | -0.4 |
| B2 - His-F epoxy resin | 3.7 | 11.1 | 2.5 | 0.2 |
| B3 - modification of B2 | 4.1 | 11.5 | 5.6 | 2.6 |
| B4 - modified B1 trifunctional resin | 1.4 | 6.5 | -2.3 | -2.7 |

| **Epoxy resins / Visil / Antiblaze NH** | | | | |
|---|---|---|---|---|
| B1 - Bis-A epoxy resin | 6.7 | 15.5 | 9.5 | 2.2 |
| B2 - Bis-F epoxy trifunctional resin | 7.6 | 19.2 | 9.2 | 5.9 |
| B3 - modification of B2 | 7.7 | 18.5 | 14.1 | 7.4 |
| B4 - modification of B1 | 3.5 | 15.3 | 6.3 | -0.2 |

| **Phenolic (Resole) resins / Visil / Antiblaze NW** | | | | |
|---|---|---|---|---|
| DDP 5235 | 11.7 | 29.7 | -0.1 | 1.1 |
| Durez 51010 | 19.6 | 27.7 | -0.6 | 1.8 |
| XDF 4329 | 7.8 | 27.9 | -1.5 | -1.9 |
| K6541 | 8.5 | 29.0 | 0.9 | 0.1 |
| DIR 33136 | 8.8 | 27.1 | -2.0 | 0.1 |

| **Phenolic (Resole) resins/ Visil / Antiblaze NH** | | | | |
|---|---|---|---|---|
| DDP 5235 | 11.6 | 33.2 | 14.5 | 5.7 |
| Durez 51010 | 19.9 | 31.2 | 17.4 | 4.9 |
| XDF 4329 | 9.5 | 32.4 | 28.8 | 5.5 |
| K6541 | 7.6 | 29.9 | 2.7 | 2.2 |
| DIR 33136 | 11.5 | 34.9 | 7.7 | 4.8 |

### Example 2 - Preparation of Polyester Resin Composites

A 120 gm⁻² non-woven needle-punched web of Visil fibres was coated with intumescent (50 % intumescent with respect to fibre weight) suspended in a Vinamul 3303 resin (Vinamul Ltd., UK) at 15% (w/w) of binder resin with respect to intumscent. Two sets of four layers of the intumescent treated fabric were impregnated with the polyester resins Crystic 471 PALV (A) and Crystic 491 PA (B) respectively, pressed to the same thickness and cured at room temperature for 48 h to give the laminated resin composites. The composites thus produced were analysed by thermal analytical studies.

### Thermal analytical studies

Differential Thermal Analysis (DTA) and Thermal Gravimetric Analysis (TGA) results of the resins A and B (Crystic 471 PALV and Crystic 491 PA) only as well as the laminate materials formed from the resins (A) or (B) with the Visil-NW and Visil-NH fabrics are shown in Figures 3 to 6. The results are quite different and the additional char residues associated with the composite materials at temperatures above 400 °C are more thermally stable than from those of resin only. The residual char mass differences versus temperature for composites with respect to resin from TGA curves are plotted in Figure 7. Table 2 shows the additional char produced at selected temperatures with respect to the respective resin only. The laminate materials form significantly more char at temperatures of between 400 - 600 °C.

**Table 2 :**

| Char enhancement of resin/Visil- intumescent combinations | | | | |
|---|---|---|---|---|
| System | Additional char, % | | | |
| | 500°C | 600°C | 700°C | 800°C |
| ResinA/Visil - NW (4.2 : 1) | 6.9 | 3.1 | 2.6 | 2.5 |
| ResinA/Visil - NH (4.3 : 1) | 11.2 | 5.5 | 4.4 | 4.2 |
| ResinB/Visil - NW (3.2 : 1) | 11.7 | 3.6 | 2.7 | 2.6 |
| ResinB/Visil - NH (3.2 : 1) | 12.0 | 3.6 | 2.2 | 2.0 |

## Claims

1. A rigid composite material comprising a fire retardant fibrous element, an intumescent material and a resin, characterised in that when the composite material is exposed to conditions under which charring of the fire retardant fibrous element, intumescent and resin occurs, the charred surfaces of the fire retardant fibrous element, intumescent and resin bond together.

2. A rigid material according to Claim 1, which further comprises an additional fibre element, which functions as a reinforcing element.

3. A rigid material according to Claim 1 or Claim 2, in which the fire retardant fibre element is selected from one or more of the group consisting of organic, inorganic and hybrid fibres.

4. A rigid material according to Claim 3, in which the fire retardant fibre element is a hybrid fibre.

5. A rigid material according to any one of claims 1 to 4, in which the fire retardant fibre element is inherently fire retardant or is treated with a fire retardant.

6. A rigid material according to any one of the preceding claims, in which the intumescent material is selected from melamine phosphate and/or dipentaerythritol.

7. A rigid material according to any one of the preceding claims, in which the resin is selected from one or more of a char forming or non-char forming polyester, epoxy and phenolic resin.

8. A rigid composite material according to any one of the preceding claims, which comprises at least two layers, wherein at least one of the layers comprises a layer of an intumescent-resin impregnated fabric.

9. A rigid material according to Claim 8, which further comprises one or more layers of a resin impregnated fabric, said one or more additional layers being other than an intumescent-resin impregnated fabric.

10. A rigid material according to Claim 8 or Claim 9, which comprises one or more layers of a non-intumescent resin impregnated fabric interleaved with one or more layers of an intumescent-resin impregnated fabric.

11. A rigid material according to Claim 8 or Claim 9, which comprises one or more layers of a non-intumescent resin impregnated fabric placed between one or more layers of an intumescent-resin impregnated fabric.

12. A rigid material according to any one of claims 8 to 12, in which the impregnation medium comprises a resin suspension of a fire retardant fibre and an intumescent.

13. A rigid material according to any one of claims 1 to 12, in which the resin includes a suspension of the fire retarded fibre element and the intumescent.

14. A rigid composite material according to any one of claims 1 to 7, which comprises a cured resin suspension of the fire retarded fibre element and the intumescent.

15. A method of manufacturing a rigid composite material according to any one of the preceding claims comprising the steps of overlaying one or more layers of a resin impregnated fire-retarded fibre element and curing the resin, wherein in at least one or more of the fire-retarded fibres layers includes an intumescent treated fibre element.

16. A method according to Claim 15 in which the fibre layers further comprise one or more layers of a resin impregnated additional fibre element, the said one or more additional layers optionally including an intumescent.

17. A method according to either Claim 15 or Claim 16, in which the fabric layers are impregnated with resin subsequent to being overlaid.

18. A method according to any one of claims 15 to 17, in which the resin comprises a suspension of a fire retardant fibre element.

19. A method according to any one of claims 15 to 18, in which the resin includes a suspension of an intumescent.

20. A method of manufacturing a rigid composite according to any one of claims 1 to 14, comprising the steps of casting a suspension of a fire retardant fibre element and an intumescent and curing the resin suspension.
